# FASCICULE DE BREVET EUROPEEN

(11) **EP 4 004 427 B1**
(45) Date de publication et mention de la délivrance du brevet: **14.06.2023**
(21) Numéro de dépôt: 20745211.1
(22) Date de dépôt: 28.07.2020
(51) Int. Cl.: F17C 13/00

(54) **DISPOSITIF D'EVACUATION DE GAZ COMPRIMÉ**
DRUCKGASABGABEVORRICHTUNG
COMPRESSED GAS DISCHARGE DEVICE

(30) Priorité: 31.07.2019 FR 1908771
(43) Date de publication de la demande: 01.06.2022
(73) Titulaire: PLASTIC OMNIUM NEW ENERGIES FRANCE, 69007 Lyon (FR)
(72) Inventeur: DEPARIS, Eric, 1130 BRUXELLES (BE); DARAGON, Aurélien, 1130 BRUXELLES (BE)
(74) Mandataire: LLR
(86) Numéro de dépôt international: PCT/EP2020/071275
(87) Numéro de publication internationale: WO 2021/018890

(56) Documents cités:
- EP-A1- 2 650 586
- EP-A2- 1 239 908
- FR-A1- 2 905 446
- US-A- 3 319 433
- US-A1- 2004 159 352
- US-B1- 6 240 909

## Description

L'invention concerne le domaine des véhicules à propulsion au gaz, tels que les voitures, les camions, les trains ou encore les bateaux. L'invention concerne plus particulièrement un dispositif d'évacuation de gaz comprimé. L'invention concerne également un système comprenant des réservoirs de gaz et un tel dispositif d'évacuation de gaz comprimé.

Il est nécessaire de stocker et de transporter des gaz comprimés dans un véhicule à propulsion au gaz. Pour ce faire, des réservoirs de gaz sont prévus pour contenir un gaz, par exemple du gaz naturel (en anglais « Compressed Natural Gas » ou CNG) ou de l'hydrogène, dont la pression est supérieure à la pression atmosphérique. La plupart des réservoirs de gaz ont une forme cylindrique et comprennent une ouverture d'évacuation de gaz à l'une de ses extrémités. Un dispositif de régulation de pression peut être connecté à l'ouverture d'évacuation pour une évacuation de gaz contrôlée en cas de nécessité, par exemple lorsque le réservoir atteint une température excessive.

On connaît déjà dans l'état la technique, notamment d'après le document US6786229, un système de réservoir de gaz comprimé. Les réservoirs tels que décrits dans ce document comprennent chacun une extrémité pourvue d'une ouverture reliée à un rail de connexion. Les ouvertures sont en communication avec un passage de gaz agencé dans le rail de connexion afin de permettre une évacuation de gaz via ce passage vers l'atmosphère. Les réservoirs sont montés fixes sur le rail de connexion. Il est également connu le document US6240909.

La solution proposée dans l'état de la technique a pour inconvénient de ne pas être adaptée à une mise en oeuvre dans un véhicule requérant des réservoirs de gaz de taille plus importante. En effet, on sait que les dimensions externes d'un réservoir composite sous pression, par exemple de type IV, varient selon le taux de remplissage du réservoir. Ainsi, le volume d'un réservoir plein est différent de celui d'un réservoir vide. A titre d'exemple, les dimensions d'un réservoir composite comprimé à 350 bar (35 MPa) augmentent de 1% par rapport au réservoir vide. Cette variation de dimension doit être prise en compte lorsqu'il s'agit d'un réservoir de taille importante. Par exemple, pour un réservoir destiné à être utilisé dans un véhicule de type camion dont le volume de stockage d'hydrogène est de 200 I, la longueur de 2 m et le diamètre de 415 mm environ, une augmentation de 1% correspond à 2 cm d'élongation du réservoir selon son axe longitudinal. Cette augmentation de dimension du réservoir créée une pression supplémentaire sur les moyens de support du réservoir, en l'occurrence le rail de connexion dans l'état de la technique, et peut les déformer voire les endommager. Cette pression peut également s'exercer sur une partie du réservoir, notamment au niveau de l'ouverture d'évacuation de gaz et compromettre l'étanchéité du système.

L'invention a notamment pour but de fournir un système d'évacuation de gaz comprimé pour tout type de véhicule à propulsion au gaz qui est plus robuste et présente une étanchéité améliorée.

A cet effet, l'invention a pour objet un dispositif d'évacuation de gaz pour un véhicule à propulsion au gaz comprimé comprenant :
- un collecteur de gaz présentant un corps creux et comprenant :
   - au moins un orifice configuré pour être en communication fluidique avec un réservoir de gaz comprimé ; et
   - une ouverture d'évacuation de gaz vers l'atmosphère ;
- une conduite configurée pour relier l'orifice à un réservoir de gaz comprimé ;
la conduite étant libre en translation dans l'orifice pour permettre un mouvement de translation d'une première extrémité de la conduite selon un axe (A) dans l'orifice.

Le mouvement de translation de la conduite permet de compenser l'expansion du réservoir, c'est-à-dire l'augmentation des dimensions du réservoir selon son axe longitudinal, par un déplacement libre de la première extrémité de la conduite selon l'axe (A), l'autre extrémité étant maintenue en position. Cette compensation est indispensable pour un réservoir de taille importante afin d'éviter que son expansion n'engendre une déformation, voire un endommagement, de la conduite ou du collecteur de gaz. Ainsi, la solution telle que proposée par la présente invention permet de réaliser un dispositif d'évacuation de gaz sûre, robuste et avec une meilleure étanchéité, en toute circonstance.

Suivant d'autres caractéristiques optionnelles du dispositif d'évacuation de gaz comprimé prises seules ou en combinaison :
- l'amplitude du mouvement de translation de la conduite dans l'orifice est limitée par la seule expansion du réservoir. Ceci permet au réservoir de s'allonger librement sur son axe longitudinal ;
- le corps creux du collecteur de gaz est un corps creux tubulaire s'étendant le long d'un axe longitudinal (Y). Ceci permet de relier fluidiquement une série de réservoirs au collecteur de gaz ;
- le corps creux du collecteur de gaz définit un passage d'évacuation de gaz vers une sortie de gaz du collecteur. Ceci permet d'évacuer le gaz par une seule sortie de gaz du collecteur ;
- l'ouverture d'évacuation de gaz vers l'atmosphère est ouverte sur l'atmosphère à la sortie de gaz du collecteur. Ceci permet d'évacuer le gaz dans l'atmosphère avec un minimum de perte de charge ;
- l'ouverture d'évacuation de gaz vers l'atmosphère débouche sans entrave dans l'atmosphère à la sortie de gaz du collecteur. Une entrave est typiquement un dispositif que le gaz évacué doit traverser avant de déboucher dans l'atmosphère, par exemple, une vanne, un régulateur de pression ou un détendeur ;
- la sortie de gaz du collecteur est située dans le prolongement axial du corps creux tubulaire de manière à diriger le gaz évacué à l'opposé d'un plan (X) sensiblement horizontal. Ceci permet d'avoir un passage d'évacuation de gaz le plus court possible vers l'atmosphère ;
- l'ouverture d'évacuation de gaz vers l'atmosphère est équipée d'un bouchon de protection. Ceci permet, d'une part, de prévenir l'entrée de fluide dans le collecteur comme, par exemple, de l'eau, de l'eau de pluie et, d'autre part, d'empêcher des corps étrangers d'entrer dans le collecteur comme, par exemple, des insectes, des rongeurs, des poussières, de la terre, de la boue, des feuilles, du sable ;
- l'ouverture d'évacuation de gaz vers l'atmosphère est équipée d'un filtre de manière à empêcher des corps étrangers d'entrer dans le collecteur comme, par exemple, des insectes, des rongeurs, des poussières, de la terre, de la boue, des feuilles, du sable ;
- le corps creux du collecteur présente un coude en forme de U à la sortie de gaz du collecteur de manière à diriger le gaz évacué vers le plan (X). Ceci permet de moins facilement laisser entrer des fluides dans le collecteur comme, par exemple, de l'eau, de l'eau de pluie et des corps étrangers comme, par exemple, des insectes, des rongeurs, des poussières, de la terre, de la boue, des feuilles, du sable ;
- le collecteur comprend un élément intermédiaire agencé dans l'orifice et destiné à recevoir au moins partiellement la première extrémité de la conduite. De préférence, le collecteur et le conduit sont réalisés en inox. L'élément intermédiaire permet de guider la première extrémité de la conduite dans son mouvement de translation et d'éviter le frottement entre pièces métalliques. L'élément intermédiaire peut être fabriqué dans un matériau élastique ce qui permet de rattraper les jeux pour obtenir une meilleure étanchéité entre la conduite et le collecteur. De préférence, l'élément intermédiaire est fabriqué en élastomère, par exemple, en caoutchouc EPDM (éthylène-propylène-diène monomère) ;
- le collecteur comprend des moyens de support d'un réservoir de gaz comprimé sur le collecteur. Par conséquent, il est possible de réaliser la fonction d'évacuation de gaz et la fonction de support d'un réservoir avec un seul élément ce qui permet un coût de fabrication réduit ainsi qu'un dispositif simplifié et allégé.

L'invention a également pour objet un système d'évacuation de gaz comprimé pour un véhicule à propulsion au gaz comprenant :
- un dispositif d'évacuation de gaz telle que décrite précédemment ;
- un réservoir de gaz comprimé ayant une forme s'étendant selon un axe (B) et comprenant une première sortie de gaz ;
la conduite comprenant une seconde extrémité raccordée à la première sortie de gaz pour mettre la seconde extrémité en communication fluidique avec la première sortie de gaz.

Ceci permet de créer une liaison glissière entre un réservoir de gaz comprimé et un dispositif d'évacuation de gaz.

Suivant d'autres caractéristiques optionnelles du système d'évacuation de gaz comprimé prises seules ou en combinaison :
- le réservoir s'étend selon l'axe (B) entre une première extrémité maintenue en position axiale et une seconde extrémité libre en translation axiale, la première sortie de gaz étant agencée à la seconde extrémité du réservoir ;
- l'axe (A) est parallèle à l'axe (B) du réservoir et, de préférence, coïncide avec l'axe (B) du réservoir. Le mouvement de la première extrémité de la conduite est donc synchronisé avec celui du réservoir. L'axe (A) peut être distinct de l'axe (B) dans le cas où la conduite comprend des portions coudées. L'axe (A) peut également coïncider avec l'axe (B) du réservoir lorsque la conduite a une forme rectiligne ;
- le système comprend un dispositif de décompression agencé à la première sortie de gaz permettant une libération contrôlée du gaz contenu dans le réservoir, la seconde extrémité étant raccordée au dispositif de décompression. A titre d'exemple, il est envisageable d'utiliser un dispositif de décompression thermo-commandé (en anglais « Thermal and Pressure Relief Device » ou TPRD) qui est conçu pour évacuer rapidement le contenu entier du réservoir. Un tel dispositif fonctionne en cas de température élevée résultant par exemple d'un incendie pour éviter l'affaiblissement du réservoir et une rupture qui pourrait avoir des conséquences catastrophiques sur le matériel et le personnel. Le débit d'évacuation de l'hydrogène gazeux associé à l'ouverture d'un dispositif TPRD est de 70g/s ce qui permet de vider un réservoir de 200 I d'hydrogène comprimé à 350 bar (35 MPa) en une dizaine de minutes. En cas d'incendie, seul le réservoir dont la température dépasse un certain seuil est vidé par l'ouverture du dispositif TPRD associé. Les réservoirs voisins restent sous pressions tant que leurs dispositifs TPRD ne sont pas ouverts ;
- le réservoir comprend une seconde sortie de gaz agencée à l'opposé de la première sortie de gaz pour garantir une vidange du réservoir au cas où l'incendie n'affecterait qu'une des extrémités du réservoir ;
- le système comprend un second dispositif de décompression agencé à la seconde sortie de gaz permettant une libération contrôlée du gaz contenu dans le réservoir.
- le dispositif comprend :
   - un second collecteur de gaz présentant un corps creux et comprenant un orifice configuré pour être en communication fluidique avec la seconde sortie de gaz et une ouverture d'évacuation de gaz vers l'atmosphère ;
   - une seconde conduite configurée pour relier l'orifice à la seconde sortie de gaz ;
- le premier et le second collecteur coïncident auquel cas le gaz est évacué uniquement par un seul côté du dispositif en cas d'incendie. Le réservoir est alors supporté par un collecteur de gaz d'un côté et un cadre de fixation de l'autre ;
- le réservoir est lié en translation avec le second collecteur auquel cas les premier et second collecteurs sont agencés de part et d'autre du réservoir au niveau de ses deux extrémités pour supporter le réservoir. Le réservoir est monté fixe sur le second collecteur pour plus de stabilité ;
- le système comprend plusieurs réservoirs disposés en quinconce. Ceci permet de réduire l'espace occupé par le système dans une direction donnée.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective d'un système d'évacuation de gaz comprimé selon un premier mode de réalisation de l'invention ;
[Fig. 2] la figure 2 est un ensemble de vues en coupe (figures 2a et 2b) selon un plan (X) du système de la figure 1, illustrant un agencement selon une première variante ;
[Fig. 3] la figure 3 est un ensemble de vues en coupe (figures 3a et 3b) illustrant un agencement selon une seconde variante ;
[Fig. 4] la figure 4 est une vue en perspective d'un système d'évacuation de gaz comprimé selon un second mode de réalisation de l'invention ;
[Fig.5] la figure 5 est un ensemble de vues de face (figures 5a et 5b) illustrant d'autres modes de réalisation de l'invention.

### Description détaillée

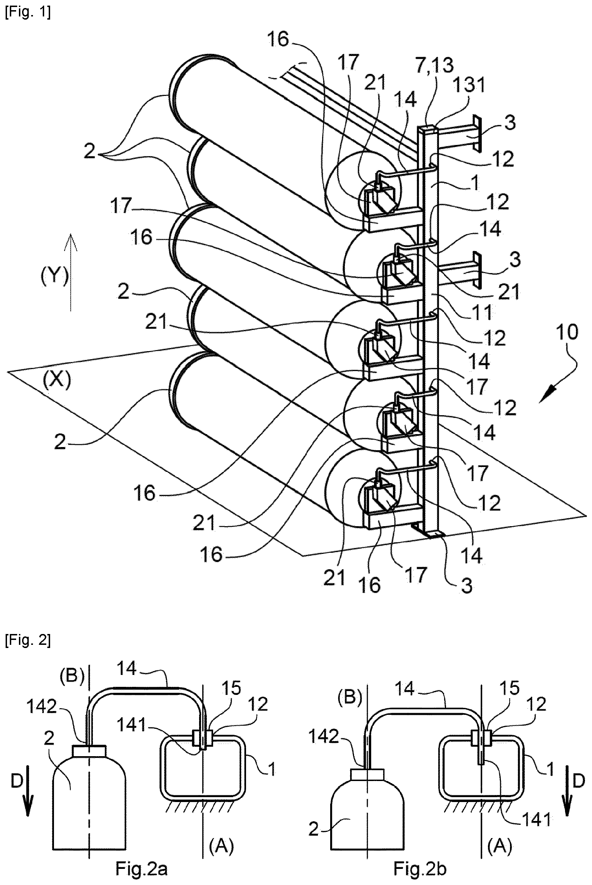

On a représenté sur la figure 1 un système d'évacuation de gaz comprimé selon un premier mode de réalisation de l'invention, désigné par la référence générale 10. Le système 10 comprend un dispositif 1 d'évacuation de gaz comprenant un collecteur 11 de gaz. Le collecteur 11 selon ce mode de réalisation présente un corps creux tubulaire d'axe longitudinal (Y) formant un volume intérieur pour le passage de fluide et définissant un passage d'évacuation de gaz vers une sortie 7 de gaz du collecteur 11. Le collecteur 11 comprend des moyens de fixation 3 destinés à fixer le dispositif 1 sur un véhicule de type camion, par exemple, dans un logement de stockage. Le dispositif 1 est installé verticalement par rapport à un plan (X) visible à la figure 1 qui est un plan sensiblement horizontal et la sortie 7 de gaz du collecteur 11 est située dans le prolongement axial du corps creux tubulaire d'axe longitudinal (Y) de manière à diriger le gaz évacué à l'opposé du plan (X). Alternativement, le corps creux du collecteur 11 présente un coude en forme de U (non représenté) à la sortie 7 de gaz du collecteur 11 de manière à diriger le gaz évacué vers le plan (X).

Dans l'exemple décrit ici, le système 10 comprend une série de réservoirs 2 d'hydrogène comprimé qui sont au nombre de cinq. Les réservoirs 2 sont disposés verticalement et sensiblement en quinconce pour réduire l'espace occupé. Chaque réservoir 2 a une forme s'étendant selon un axe (B) et comprend une première sortie de gaz 21 au bout du réservoir 2. Le collecteur 11 comprend des moyens de support 16 sous forme de barre horizontale. Chaque barre horizontale 16 permet de recevoir l'extrémité d'un réservoir 2 sans immobiliser celle-ci, par exemple, au moyen d'une liaison glissière.

Tel qu'illustré aux figures 1 à 3, le collecteur 11 comprend des orifices 12 configurés pour être en communication fluidique avec les réservoirs 2 au moyen de conduites 14. Le collecteur 11 comprend en outre une ouverture d'évacuation 13 de gaz vers l'atmosphère qui est agencée sur le dessus du collecteur 11 et ouverte sur l'atmosphère à la sortie 7 de gaz du collecteur 11. L'ouverture 13 est équipée d'un bouchon de protection 131 permettant de prévenir l'entrée de fluide comme, par exemple, de l'eau de pluie et des poussières dans le collecteur 11. Le bouchon de protection 131 agit comme un clapet qui s'ouvre quand du gaz est présent dans le collecteur 11. Avantageusement, le clapet s'ouvre sous l'effet de la pression du gaz évacué. Alternativement au bouchon de protection 131, l'ouverture 13 est équipée d'un filtre (non représenté) de manière à empêcher des corps étrangers d'entrer dans le collecteur 11.

Chaque réservoir 2 comprend sur la première sortie de gaz 21 une vanne OTV (en anglais « On-Tank Valve ») destinée à être mise en communication fluidique avec une conduite de remplissage du réservoir, une conduite d'alimentation en hydrogène et une conduite d'évacuation de l'hydrogène. La vanne OTV comprend une soupape anti-retour qui empêche l'hydrogène de remonter dans la conduite de remplissage du réservoir 2, une vanne d'arrêt pour alimenter un dispositif de consommation d'hydrogène (par exemple, une pile à combustible) à travers un détenteur. La vanne d'arrêt est normalement fermée. La vanne OTV comprend en outre un dispositif de décompression 17 thermo-commandé (en anglais « Thermal and Pressure Relief Device » ou TPRD), tel que visible à la figure 1, qui est conçu pour évacuer rapidement le contenu entier du réservoir. Il s'agit des trois fonctions indispensables pour respecter le règlement UNECE n°134 concernant les « prescriptions uniformes relatives à l'homologation des véhicules automobiles et de leurs composants en ce qui concerne les prescriptions de sécurité des véhicules fonctionnant à l'hydrogène ».

Afin d'être en communication fluidique avec les réservoirs 2, le collecteur 11 comprend des conduites 14 présentant chacune une première extrémité 141 reliée à l'orifice 12 de façon mobile. L'agencement de la première extrémité 141 par rapport à l'orifice 12 sera décrit plus loin. La conduite 14 comprend une seconde extrémité 142 qui est en communication fluidique avec la première sortie de gaz 21. De préférence, la seconde extrémité 142 est fixée sur le dispositif de décompression 17 de façon étanche. Ainsi, en cas de température importante, le dispositif de décompression évacue l'hydrogène contenu dans le réservoir 2 de façon contrôlée. Au travers de la conduite 14, l'hydrogène arrive dans le passage d'évacuation défini par le corps creux du collecteur 11 et est évacué vers l'atmosphère via l'ouverture d'évacuation 13 à la sortie 7 du collecteur 11.

Les figures 2a et 2b illustrent l'agencement de la première extrémité 141 de la conduite 14 par rapport à l'orifice 12 du collecteur 11 selon une première variante. Cette variante correspondant à celle mise en oeuvre dans le système d'évacuation de gaz tel qu'illustré à la figure 1. Dans cette variante, le collecteur 11 comprend un élément intermédiaire 15, par exemple un joint circulaire 15 d'un axe (A), agencé dans l'orifice 12. Le réservoir 2 est installé de façon à ce que son axe (B) soit parallèle à l'axe (A) et distinct de l'axe (A). Afin de relier l'orifice 12 et la première sortie de gaz 21 du réservoir 2, la conduite 14 comprend plusieurs portions coudées pour que la première extrémité 141 puisse coulisser dans le joint circulaire 15 selon l'axe (A). Ainsi, lorsque les dimensions du réservoir 2 diminuent pendant que le réservoir 2 se vide, la conduite 14 se déplace dans une direction D telle qu'illustrée aux figures 2a et 2b en sorte que la première extrémité 141 pénètre le volume intérieur du collecteur 11 par un mouvement de translation selon l'axe (A) dans l'orifice 12.

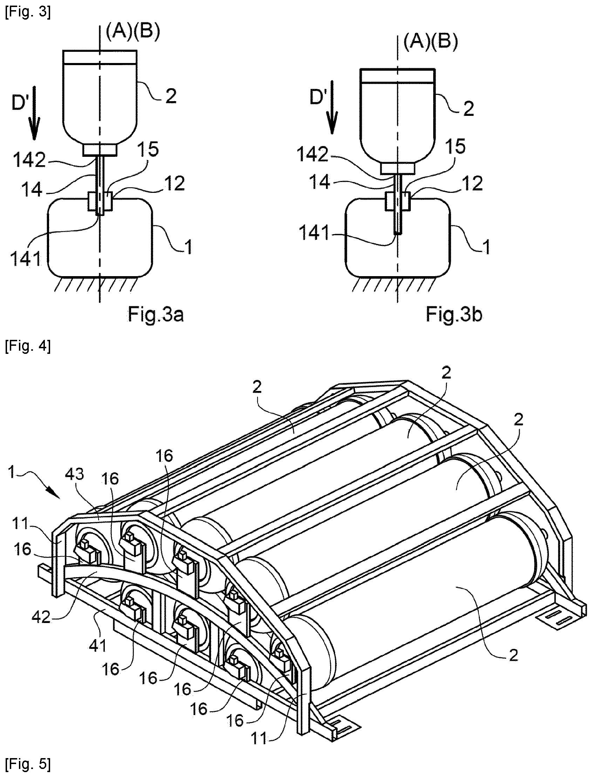

Les figures 3a et 3b illustrent l'agencement de la première extrémité 141 de la conduite 14 par rapport à l'orifice 12 du collecteur 11 selon une seconde variante. Dans cette variante, le réservoir 2 est installé de façon à ce que son axe (B) soit parallèle à l'axe (A) et coïncide avec l'axe (A), la première sortie de gaz 21 étant en regard de l'orifice 12. Afin de relier l'orifice 12 et la première sortie de gaz 21 du réservoir 2, la conduite 14 peut comprendre plusieurs portions coudées pour que la première extrémité 141 puisse coulisser dans le joint circulaire 15 selon l'axe (A). De préférence et pour simplifier le système, la conduite 14 peut être d'une forme rectiligne. Ainsi, lorsque les dimensions du réservoir 2 augmentent pendant le remplissage du réservoir 2, la conduite 14 se déplace dans une direction D' telle qu'illustrée aux figures 3a et 3b en sorte que la première extrémité 141 pénètre le volume intérieur du collecteur 11 par un mouvement de translation selon l'axe (A) dans l'orifice 12.

La figure 4 illustre un second mode de réalisation de l'invention dans lequel le dispositif 1 d'évacuation de gaz est configuré pour être fixé sur un véhicule de type train ou bus, par exemple, dans un logement de stockage. Le dispositif 1 comprend une partie horizontale 41 configurée pour recevoir plusieurs réservoirs 2, par exemple trois tel que visible à la figure 4, la partie horizontale comprenant des moyens de support 16 des réservoirs 2. Le dispositif 1 comprend encore une partie intermédiaire 42 ayant la forme d'un arc et configurée pour recevoir plusieurs autres réservoirs 2, par exemple cinq tel que visible à la figure 4, la partie intermédiaire comprenant des moyens de support 16 des réservoirs 2. Enfin, le dispositif 1 comprend une partie supérieure 43 permettant de maintenir les réservoirs 2 en place.

Le dispositif 1 comprend des collecteurs 11 présentant un corps creux formant un passage de fluide. Les collecteurs 11 forment les parties verticales du dispositif 1 tel qu'illustré à la figure 4. Dans ce mode de réalisation, les conduites 14 (non représentées) peuvent être raccordées aux orifices 12 (non représentés) agencés sur les collecteurs 11 pour mettre les orifices 12 en communication fluidique avec les réservoirs 2. Il est également possible de prévoir des orifices sur la partie horizontale 41 et/ou la partie intermédiaire 42 et/ou la partie supérieure 43 auxquels cas ces parties 41, 42, 43 sont elles-mêmes en communication fluidique avec les collecteurs 11. Les agencements de la conduite 14 par rapport à l'orifice 12 tels qu'illustrés aux figures 2 et 3 et décrits ci-dessus peuvent être mis en oeuvre dans ce second mode de réalisation de l'invention par l'homme du métier sans difficulté particulière.

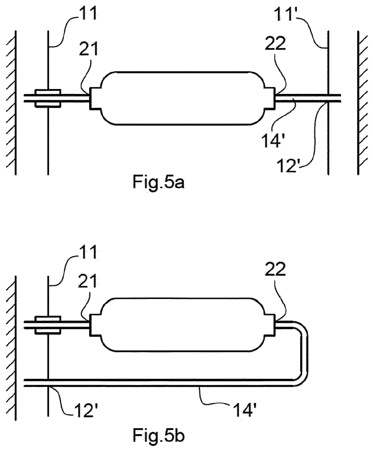

L'invention n'est pas limitée aux modes de réalisation présentés et d'autres modes de réalisation apparaîtront clairement à l'homme du métier. Il est notamment possible que les réservoirs 2 comprennent une seconde sortie de gaz 22 agencée à l'opposé de la première sortie de gaz 21 et que le dispositif 1 comprend un orifice simplifié 12' configuré pour être en communication fluidique avec la seconde sortie de gaz 22, des moyens de support (non représentés) étant prévus pour supporter les réservoirs. Dans ce cas de figure, le dispositif 1 comprend une seconde conduite 14' configurée pour relier l'orifice simplifié 12' à la seconde sortie de gaz 22 sans avoir besoin de coulisser dans l'orifice simplifié 12'. Un tel orifice simplifié 12' peut être agencé dans un unique collecteur 11 comme visible à la figure 5b ou dans un collecteur distinct 11' qui serait agencé à l'autre bout du réservoir 2 et configuré pour recevoir le réservoir 2 de façon fixe comme visible à la figure 5a.

Il est à noter que les agencements de la première extrémité 141 de la conduite 14 par rapport à l'orifice 12, tels qu'illustrés aux figures 2 et 3 et décrits ci-dessus, peuvent également être mis en oeuvre pour la connexion entre la seconde extrémité 142 de la conduite 14 et la première sortie 21 de gaz du réservoir 2. Il est notamment possible de prévoir un passage de fluide raccordé à la première sortie 21 de gaz, par exemple au niveau du dispositif de décompression 17, configuré pour recevoir un élément intermédiaire 15 dans lequel coulisserait la seconde extrémité 142 de la conduite 14, la première extrémité 141 étant raccordée à l'orifice 12 du collecteur 11 de façon étanche ou non.

Bien que les exemples illustrés précédemment font référence à de l'hydrogène, l'invention n'est pas limitée à ce gaz. En effet, l'invention s'applique aussi à d'autres gaz stockés sous pression comme, par exemple, du gaz naturel.

## Revendications

1. Dispositif (1) d'évacuation de gaz pour un véhicule à propulsion au gaz comprimé comprenant :
- un collecteur (11) de gaz présentant un corps creux et comprenant :
• au moins un orifice (12) configuré pour être en communication fluidique avec un réservoir de gaz comprimé ; et
• une ouverture d'évacuation (13) de gaz vers l'atmosphère ;
- une conduite (14) configurée pour relier l'orifice (12) à un réservoir de gaz comprimé ;
la conduite (14) étant libre en translation dans l'orifice (12) pour permettre un mouvement de translation d'une première extrémité (141) de la conduite (14) selon un axe (A) dans l'orifice (12).

2. Dispositif selon la revendication 1, dans lequel le corps creux du collecteur (11) de gaz est un corps creux tubulaire s'étendant le long d'un axe longitudinal (Y).

3. Dispositif selon la revendication 1 ou 2, dans lequel le corps creux du collecteur (11) de gaz définit un passage d'évacuation de gaz vers une sortie (7) de gaz du collecteur (11).

4. Dispositif selon la revendication 3, dans lequel l'ouverture d'évacuation (13) de gaz vers l'atmosphère est ouverte sur l'atmosphère à la sortie (7) de gaz du collecteur (11).

5. Dispositif selon l'une quelconque des revendication 1 à 4, dans lequel le collecteur (11) comprend un élément intermédiaire (15) agencé dans l'orifice (12) et destiné à recevoir au moins partiellement la première extrémité (141) de la conduite (14).

6. Dispositif selon l'une quelconque des revendications 1 à 5, dans lequel le collecteur (11) comprend des moyens de support (16) d'un réservoir de gaz comprimé sur le collecteur (11).

7. Système (10) d'évacuation de gaz comprimé pour un véhicule à propulsion au gaz comprenant :
- un dispositif (1) d'évacuation de gaz selon l'une quelconque des revendications 1 à 6 ;
- un réservoir (2) de gaz comprimé ayant une forme s'étendant selon un axe (B) et comprenant une première sortie de gaz (21) ;
la conduite (14) comprenant une seconde extrémité (142) raccordée à la première sortie de gaz (21) pour mettre la seconde extrémité (142) en communication fluidique avec la première sortie de gaz (21).

8. Système (10) selon la revendication 7, dans lequel l'axe (A) est parallèle à l'axe (B) du réservoir (2) et distinct de l'axe (B) du réservoir (2).

9. Système (10) selon la revendication 7, dans lequel l'axe (A) est parallèle à l'axe (B) du réservoir (2) et, de préférence, coïncide avec l'axe (B) du réservoir (2).

10. Système (10) selon l'une quelconque des revendications 7 à 9, comprenant un dispositif de décompression (17) agencé à la première sortie de gaz (21) permettant une libération contrôlée du gaz contenu dans le réservoir (2), la seconde extrémité (142) étant raccordée au dispositif de décompression (17).

11. Système (10) selon l'une quelconque des revendications 7 à 10, dans lequel le réservoir (2) comprend une seconde sortie de gaz (22) agencée à l'opposé de la première sortie de gaz (21).

12. Système (10) selon la revendication 11, dans lequel le dispositif (1) comprend :
- un second collecteur de gaz (11') présentant un corps creux et comprenant un orifice (12') configuré pour être en communication fluidique avec la seconde sortie de gaz (22) et une ouverture d'évacuation de gaz vers l'atmosphère ;
- une seconde conduite (14') configurée pour relier l'orifice (12') à la seconde sortie de gaz (22).

13. Système (10) selon la revendication 12, dans lequel le premier (11) et le second (11') collecteur coïncident.

14. Système (10) selon la revendication 12, dans lequel le réservoir (2) est lié en translation avec le second collecteur (11').

15. Système (10) selon l'une quelconque des revendications 7 à 14, comprenant plusieurs réservoirs (2) disposés en quinconce.

## Patentansprüche

1. Gasabzugsvorrichtung (1) für ein Fahrzeug mit Druckgasantrieb, aufweisend:
- einem Gassammler (11) mit einem Hohlkörper, aufweisend:
- mindestens eine Öffnung (12), die so konfiguriert ist, dass sie in Fluidverbindung mit einem Behälter für komprimiertes Gas steht; und
- eine Gasauslassöffnung (13) zur Atmosphäre;
- eine Leitung (14), die konfiguriert ist, die Öffnung (12) mit einem Druckgasbehälter zu verbinden;
wobei die Leitung (14) in der Öffnung (12) frei verschiebbar ist, um eine Translationsbewegung eines ersten Endes (141) der Leitung (14) entlang einer Achse (A) in der Öffnung (12) zu ermöglichen.

2. Vorrichtung nach Anspruch 1, wobei der Hohlkörper des Gassammlers (11) ein röhrenförmiger Hohlkörper ist, der sich entlang einer Längsachse (Y) erstreckt.

3. Vorrichtung nach Anspruch 1 oder 2, wobei der Hohlkörper des Gassammlers (11) einen Gasauslasskanal zu einem Gasauslass (7) des Sammlers (11) definiert.

4. Vorrichtung nach Anspruch 3, bei der die Gasauslassöffnung (13) zur Atmosphäre am Gasauslass (7) des Sammlers (11) zur Atmosphäre hin offen ist.

5. Vorrichtung nach einem der Ansprüche 1 bis 4, wobei der Sammler (11) ein Zwischenelement (15) aufweist, das in der Öffnung (12) angeordnet ist und dazu bestimmt ist, das erste Ende (141) der Leitung (14) zumindest teilweise aufzunehmen.

6. Vorrichtung nach einem der Ansprüche 1 bis 5, wobei der Sammler (11) Mittel (16) zum Tragen eines Druckgasbehälters auf dem Sammler (11) aufweist.

7. System (10) zum Abführen von komprimiertem Gas für ein gasbetriebenes Fahrzeug, aufweisend:
- einer Gasabzugsvorrichtung (1) nach einem der Ansprüche 1 bis 6;
- einen Behälter (2) für komprimiertes Gas, der eine Form hat, die sich entlang einer Achse (B) erstreckt, und einen ersten Gasauslass (21) aufweist;
wobei die Leitung (14) ein zweites Ende (142) aufweist, das mit dem ersten Gasauslass (21) verbunden ist, um das zweite Ende (142) in Fluidverbindung mit dem ersten Gasauslass (21) zu bringen.

8. System (10) nach Anspruch 7, wobei die Achse (A) parallel zur Achse (B) des Behälters (2) und getrennt von der Achse (B) des Behälters (2) verläuft.

9. System (10) nach Anspruch 7, wobei die Achse (A) parallel zur Achse (B) des Behälters (2) verläuft und vorzugsweise mit der Achse (B) des Behälters (2) zusammenfällt.

10. System (10) nach einem der Ansprüche 7 bis 9, aufweisend eine am ersten Gasauslass (21) angeordnete Druckentlastungsvorrichtung (17), die eine kontrollierte Freisetzung des im Behälter (2) enthaltenen Gases ermöglicht, wobei das zweite Ende (142) mit der Druckentlastungsvorrichtung (17) verbunden ist.

11. System (10) nach einem der Ansprüche 7 bis 10, wobei der Behälter (2) einen zweiten Gasauslass (22) aufweist, der gegenüber dem ersten Gasauslass (21) angeordnet ist.

12. System (10) nach Anspruch 11, wobei die Vorrichtung (1) Folgendes aufweist:
- einen zweiten Gassammler (11'), der einen Hohlkörper und eine Öffnung (12') aufweist, die konfiguriert ist, in Fluidverbindung mit dem zweiten Gasauslass (22) zu stehen, und eine Öffnung zum Abgeben von Gas an die Atmosphäre aufweist;
- eine zweite Leitung (14'), die konfiguriert ist, die Öffnung (12') mit dem zweiten Gasauslass (22) verbinden.

13. System (10) nach Anspruch 12, bei der erste (11) und der zweite (11') Sammler sich decken.

14. System (10) nach Anspruch 12, bei dem der Behälter (2) translatorisch mit dem zweiten Sammler (11') verbunden ist.

15. System (10) nach einem der Ansprüche 7 bis 14, das mehrere versetzt angeordnete Behälter (2) aufweist.

## Claims

1. Gas discharge device (1) for a vehicle powered by compressed gas, comprising:
- a gas manifold (11) having a hollow body and comprising:
• at least one port (12) configured to be in fluid communication with a compressed gas tank; and
• an opening (13) for discharging gas into the atmosphere;
- a pipe (14) configured to connect the port (12) to a compressed gas tank;
the pipe (14) being freely translatable in the port (12) to enable a first end (141) of the pipe (14) to move translationally along an axis (A) in the port (12).

2. Device according to claim 1, wherein the hollow body of the gas manifold (11) is a tubular hollow body extending along a longitudinal axis (Y).

3. Device according to claim 1 or 2, wherein the hollow body of the gas manifold (11) defines a gas discharge passage to a gas outlet (7) of the manifold (11).

4. Device according to claim 3, wherein the gas discharge opening (13) to the atmosphere is open to the atmosphere at the gas outlet (7) of the manifold (11).

5. Device according to one of claims 1 to 4, wherein the manifold (11) comprises an intermediate element (15) arranged in the port (12) and intended to at least partially receive the first end (141) of the pipe (14).

6. Device according to one of claims 1 to 5, wherein the manifold (11) comprises means (16) for supporting a compressed gas tank on the manifold (11).

7. Compressed gas discharge system (10) for a vehicle powered by compressed gas, comprising:
- a gas discharge device (1) according to one of claims 1 to 6;
- a compressed gas tank (2) having a shape extending along an axis (B) and comprising a first gas outlet (21);
the pipe (14) comprising a second end (142) connected to the first gas outlet (21) for placing the second end (142) in fluid communication with the first gas outlet (21).

8. System (10) according to claim 7, wherein the axis (A) is parallel to the axis (B) of the tank (2) and separate from the axis (B) of the tank (2).

9. System (10) according to claim 7, wherein the axis (A) is parallel to the axis (B) of the tank (2) and preferably coincides with the axis (B) of the tank (2).

10. System (10) according to one of claims 7 to 9, comprising a relief device (17) arranged at the first gas outlet (21) allowing controlled release of the gas contained in the tank (2), the second end (142) being connected to the relief device (17).

11. System (10) according to one of claims 7 to 10, wherein the tank (2) comprises a second gas outlet (22) arranged opposite the first gas outlet (21).

12. System (10) according to claim 11, wherein the device (1) comprises:
- a second gas manifold (11') having a hollow body and comprising a port (12') configured to be in fluid communication with the second gas outlet (22) and a gas discharge opening to the atmosphere;
- a second pipe (14') configured to connect the port (12') to the second gas outlet (22).

13. System (10) according to claim 12, wherein the first (11) and the second (11') manifold coincide.

14. System (10) according to claim 12, wherein the tank (2) is linked in translation with the second manifold (11').

15. System (10) according to one of claims 7 to 14, comprising several tanks (2) arranged in staggered rows.
